# NEUE EUROPÄISCHE PATENTSCHRIFT

(11) **EP 1 917 706 B2**
(45) Veröffentlichungstag und Bekanntmachung des Hinweises auf die Entscheidung über den Einspruch: **03.05.2017**
(45) Hinweis auf die Patenterteilung: 17.07.2013
(21) Anmeldenummer: 06764273.6
(22) Anmeldetag: 31.07.2006
(51) Int. Cl.: H02M 7/49, H02H 7/122

(54) **STROMRICHTERSCHALTUNG MIT VERTEILTEN ENERGIESPEICHERN**
RECTIFIER CIRCUIT WITH DISTRIBUTED ENERGY STORES
MONTAGE CONVERTISSEUR COMPRENANT DES ACCUMULATEURS D'ENERGIE REPARTIS

(30) Priorität: 26.08.2005 DE 102005040543
(43) Veröffentlichungstag der Anmeldung: 07.05.2008
(73) Patentinhaber: Siemens Aktiengesellschaft, 80333 München (DE)
(72) Erfinder: HILLER, Marc, 90455 Nürnberg (DE); SOMMER, Rainer, 91336 Heroldsbach (DE)
(86) Internationale Anmeldenummer: PCT/EP2006/064828
(87) Internationale Veröffentlichungsnummer: WO 2007/023064

(56) Entgegenhaltungen:
- EP-A2- 0 677 910
- DE-A1- 10 103 031
- DE-A1- 10 217 889
- DE-A1- 10 323 220
- DE-A1- 10 333 798
- JP-A- 8 205 516
- NL-A- 6 605 497
- US-A- 5 625 545
- US-A- 5 986 909

## Beschreibung

Die Erfindung bezieht sich auf eine Stromrichterschaltung gemäß Oberbegriff des Anspruchs 1.

Eine derartige gattungsgemäße Stromrichterschaltung ist aus der DE 101 03 031 A1 bekannt und ein Ersatzschaltbild einer derartigen Stromrichterschaltung ist in der Figur 1 näher dargestellt. Gemäß diesem Ersatzschaltbild weist diese bekannte Stromrichterschaltung drei Phasenmodule auf, die jeweils mit 100 bezeichnet sind. Diese Phasenmodule 100 sind gleichspannungsseitig jeweils mit einer positiven und einer negativen Gleichspannungs-Sammelschiene P₀ und N₀ elektrisch leitend verbunden. Zwischen diesen beiden Gleichspannungs-Sammelschienen P₀ und N₀ steht eine nicht näher bezeichnete Gleichspannung an. Jedes Phasenmodul 100 weist ein oberes und ein unteres Stromrichterventil T1 bzw. T3 bzw. T5 und T2 bzw. T4 bzw. T6 auf. Jedes dieser Stromrichterventile T1 bis T6 weist eine Anzahl von elektrisch in Reihe geschalteten zweipoligen Subsystemen 10 auf. In diesem Ersatzschaltbild sind vier dieser Subsysteme 10 dargestellt. Jeder Verknüpfungspunkt zweier Stromrichterventile T1 und T2 bzw. T3 und T4 bzw. T5 und T6 eines Phasenmoduls 100 bildet einen wechselspannungsseitigen Anschluss L1 bzw. L2 bzw. L3 dieses Phasenmoduls 100. Da in dieser Darstellung die Stromrichterschaltung drei Phasenmodule 100 aufweist, kann an deren wechselspannungsseitigen Anschlüssen L1, L2 und L3, auch als Lastanschlüsse bezeichnet, eine dreiphasige Last, beispielsweise ein Drehstrommotor, angeschlossen werden.

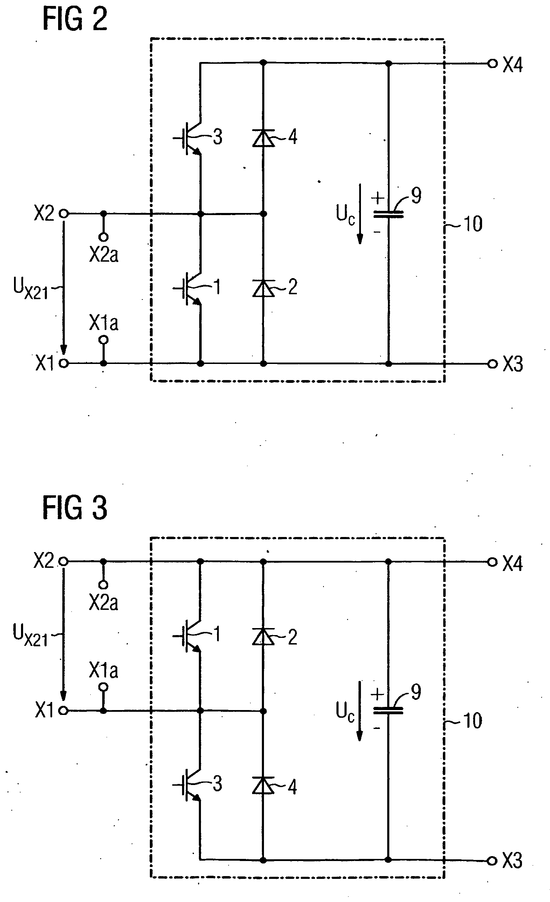

In der Figur 2 ist ein Ersatzschaltbild einer bekannten Ausführungsform eines zweipoligen Subsystems 10 näher dargestellt. Die Schaltungsanordnung nach Figur 3 stellt eine funktional völlig gleichwertige Variante dar, die ebenfalls aus der DE 101 03 031 A1 bekannt ist. Dieses bekannte zweipolige Subsystem 10 weist zwei abschaltbare Halbleiterschalter 1 und 3, zwei Dioden 2 und 4 und einen unipolaren Speicherkondensator 9 auf. Die beiden abschaltbaren Halbleiterschalter 1 und 3 sind elektrisch in Reihe geschaltet, wobei diese Reihenschaltung elektrisch parallel zum Speicherkondensator 9 geschaltet ist. Jedem abschaltbaren Halbleiterschalter 1 und 3 ist eine der beiden Dioden 2 und 4 derart elektrisch parallel geschaltet, dass diese zum korrespondierenden abschaltbaren Halbleiterschalter 1 oder 3 antiparallel geschaltet ist. Der unipolare Speicherkondensator 9 des Subsystems 10 besteht entweder aus einem Kondensator oder einer Kondensatorbatterie aus mehreren solchen Kondensatoren mit einer resultierenden Kapazität C₀. Der Verbindungspunkt von Emitter des abschaltbaren Halbleiterschalters 1 und Anode der Diode 2 bildet eine Anschlussklemme X1 des Subsystems 10. Der Verbindungspunkt der beiden abschaltbaren Halbleiterschalter 1 und 3 und der beiden Dioden 2 und 4 bilden eine zweite Anschlussklemme X2 des Subsystems 10.

In der Ausführungsform des Subsystems 10 gemäß Figur 3 bildet dieser Verbindungspunkt die erste Anschlussklemme X1. Der Verbindungspunkt von Kollektor des abschaltbaren Halbleiterschalters 1 und Kathode der Diode 2 bildet die zweite Anschlussklemme X2 des Subsystems 10.

In beiden Darstellungen der zwei Ausführungsformen des Subsystems 10 sind die beiden Anschlüsse des Speicherkondensators 9 aus dem Subsystem 10 herausgeführt und bilden zwei Anschlussklemmen X3 und X4. Als abschaltbare Halbleiterschalter 1 und 3 werden wie in den Figuren 2 und 3 dargestellt Insulated-Gate-Bipolar-Transistoren (IGBT) verwendet. Ebenfalls können MOS-Feldeffekttransistoren, auch als MOS-FET bezeichnet, verwendet werden. Außerdem können Gate-Turn-Off-Thyristoren, auch als GTO-Thyristoren bezeichnet, oder Integrated-Gate-Commutated-Thyristoren (IGCT) verwendet werden.

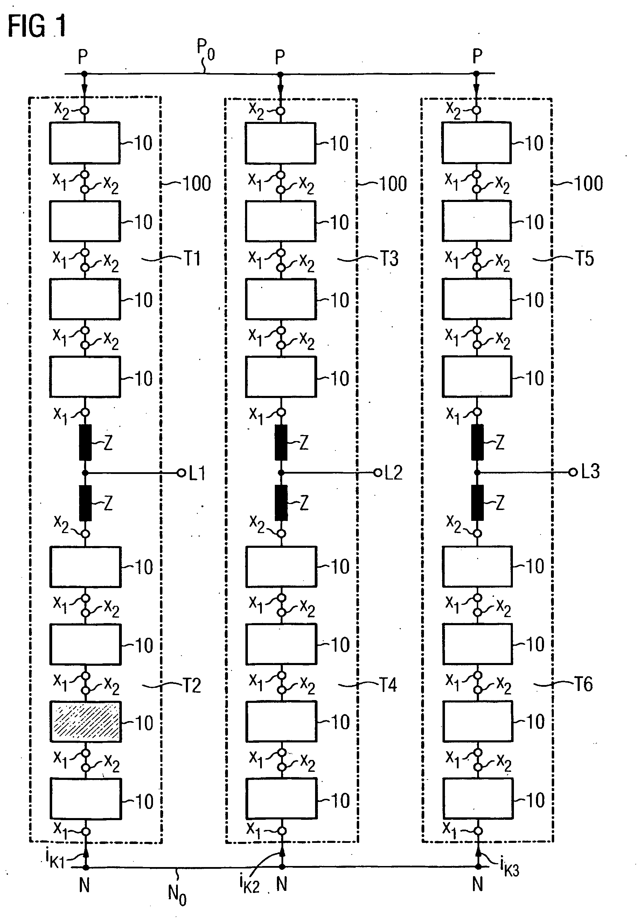

Gemäß der DE 101 03 031 A1 können die Subsysteme 10 eines jeden Phasenmoduls 100 der Stromrichterschaltung nach Figur 1 in einem Schaltzustand I und II gesteuert werden. Im Schaltzustand I ist der abschaltbare Halbleiterschalter 1 eingeschaltet und der abschaltbare Halbleiterschalter 3 ausgeschaltet. Dadurch ist eine an den Anschlussklemmen X1 und X2 anstehende Klemmenspannung U_{X21} des Subsystems 10 gleich Null. Im Schaltzustand II sind der abschaltbare Halbleiterschalter 1 ausgeschaltet und der abschaltbare Halbleiterschalter 3 eingeschaltet. In diesem Schaltzustand II ist die anstehende Klemmenspannung U_{X21} gleich der am Speicherkondensator 9 anstehenden Kondensatorspannung U_{C}.

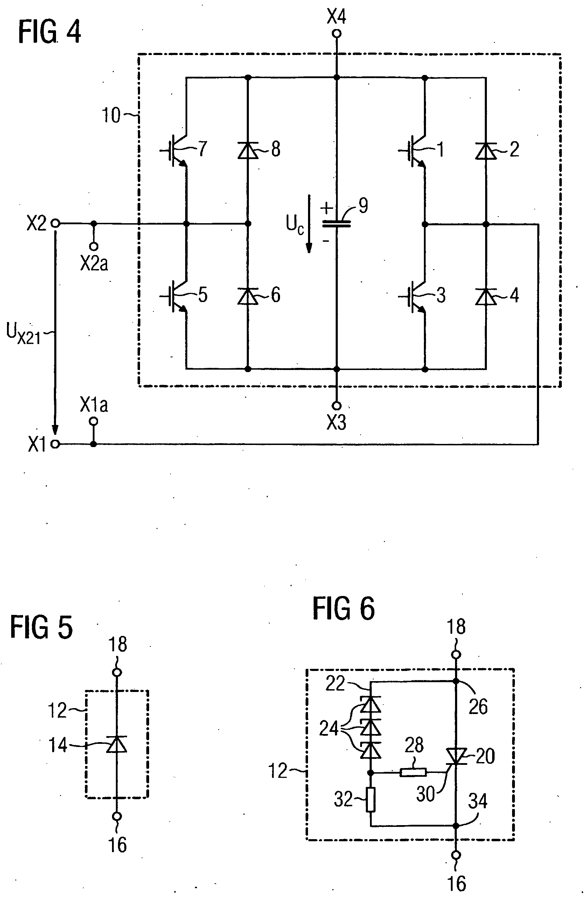

In der Figur 4 ist das Ersatzschaltbild einer weiteren Ausführungsform für das Subsystem 10 näher dargestellt, das aus der DE 102 17 889 A1 bekannt ist. Diese Ausführungsform des Subsystems 10 hat die Form einer Vollbrückenschaltung eines Spannungsumrichters, nur dass diese hier als einzelner Zweipol genutzt wird. Diese Brückenschaltung besteht aus vier abschaltbaren Halbleiterschaltern 1, 3, 5 und 7, denen jeweils eine Diode 2, 4, 6 und 8 antiparallel geschaltet sind. An den gleichspannungsseitigen Anschlüssen dieser Brückenschaltung ist ein Speicherkondensator 9 geschaltet, der sich auf eine Spannung U_{C} aufladen lässt. Dazu sind die abschaltbaren Halbleiterschalter 1, 3, 5 und 7 ausgeschaltet. Mit dem Schalten der abschaltbaren Halbleiterschalter 1, 3, 5 und 7 entstehen Schaltzustände, mit denen die an den Anschlussklemmen X1 und X2 des Subsystems 10 anstehende Klemmenspannung U_{X21} unabhängig von der Stromrichtung positiv, negativ oder auch Null sein kann. Gegenüber der Ausführungsform gemäß Figur 2 oder 3 existiert bei dieser Ausführungsform ein weiterer Schaltzustand III, bei dem die Klemmenspannung U_{X21} des Subsystems 10 gleich der negativen am Speicherkondensator 9 anstehenden Kondensatorspannung U_{C} ist. Auch bei dieser Ausführungsform sind die Anschlüsse des Speicherkondensators 9 herausgeführt und mit X3 und X4 bezeichnet.

Damit der Stromrichter gemäß Figur 1 redundant arbeiten kann, muss sichergestellt werden, dass ein fehlerhaftes Subsystem 10 an seinen Klemmen X1 und X2 dauerhaft kurzgeschlossen ist. Das heißt, dass die Klemmenspannung U_{X21} des gestörten Subsystems 10 Null ist.

Durch Ausfall eines der im Subsystem 10 vorhandenen abschaltbaren Halbleiterschalter 1, 3, 5 oder 7 oder einer zugehörigen Ansteuerschaltung ist dieses Subsystem 10 in seiner ordnungsgemäßen Funktion gestört. Das heißt, das Subsystem 10 kann nicht mehr in einem der möglichen Schaltzustände I, II oder III gesteuert werden. Durch das Kurzschließen des Subsystems 10 an seinen Anschlüssen X1 und X2 wird diesem Subsystem 10 keine Energie mehr zugeführt. Dadurch werden Folgeschäden wie Überhitzung und Brand beim weiteren Betrieb des Umrichters sicher ausgeschlossen. Eine derartige kurzschlussartige leitende Verbindung zwischen den Anschlussklemmen X1 und X2 eines gestörten Subsystems 10 muss zumindest den Betriebsstrom eines Stromrichterventils T1,...,T6 des Phasenmoduls 100, in dem das gestörte Subsystems 10 verschaltet ist, sicher und ohne Überhitzung führen.

Aus der US 5,986,909 A ist eine Stromrichterschaltung bekannt, die pro Phasenmodul wenigstens zwei elektrisch in Reihe geschaltete Subsysteme aufweist. Als Subsysteme werden bei dieser bekannten Stromrichterschaltung Frequenzumrichter verwendet, die jeweils netzseitig eine ungesteuerte 6-polige Diodenbrücke und lastseitig einen zweiphasigen selbstgeführten Pulsstromrichter aufweisen. Gleichspannungsseitig sind diese beiden Stromrichter mittels eines Gleichspannungszwischenkreises miteinander elektrisch leitend verbunden. Netzseitig sind diese Subsysteme jeweils mit einer Sekundärwicklung eines Netztransformators verknüpft. Lastseitig sind die Subsysteme eines Phasenmoduls elektrisch in Reihe geschaltet. Bei dieser bekannten Stromrichterschaltung werden gestörte Subsysteme kurzgeschlossen, wobei ein Magnetschalter, ein Federspeicherkontakt, antiparallele Thyristoren oder zwei antiseriell geschaltete abschaltbare Halbleiterschalter als Bypass-Schaltung für die lastseitigen Anschlüsse eines jeden Subsystems verwendet werden. Die mechanischen Kurzschließer müssen aufgrund ihrer Mechanik häufiger gewartet werden. Die elektrischen Kurzschließer benötigen jeweils eine auf hohem Potential liegende Stromversorgung und eine Ansteuereinrichtung, die steuerungsseitig mit einer Stromrichtersteuerung signaltechnisch verbunden sein müssen.

Aus der DE 103 23 220 A1 ist ebenfalls eine Stromrichterschaltung bekannt, deren Phasenmödule wenigstens zwei elektrisch in Reihe geschaltete Subsysteme aufweisen. Jedes Subsystem dieser bekannten Stromrichterschaltung hat die Form einer Vollbrückenschaltung eines Spannungsumrichters, nur dass diese als einzelner Zweipol genutzt wird. Die Brückenschaltung besteht aus vier abschaltbaren Halbleiterschaltern mit antiparallel geschalteten Dioden. An den gleichspannungsseitigen Anschlüssen ist ein Speicherkondensator geschaltet. Um ein gestörtes Subsystem kurzschließen zu können, weist jedes Subsystem ein Schutz-Bauelement auf, das elektrisch parallel zum Speicherkondensator geschaltet ist. Als Schutz-Bauelemente werden eine Rückschwingdiode oder ein Kurzschluss-Thyristor verwendet. Wird ein Kurzschluss-Thyristor verwendet, der niederinduktiv am Speicherkondensator angeschlossen ist, werden ebenfalls eine Sensorschaltung und eine Zündschaltung benötigt.

Im Fehlerfall eines abschaltbaren Halbleiterschalters eines Subsystems fließt ein hoher Kurzschlussstrom, der zu einem Lichtbogen bis zur Explosion des Halbleitermoduls führen kann. Durch diesen Kurzschlussstrom wird der Speicherkondensator entladen. Durch die parallel zum Speicherkondensator geschaltete Rückschwingdiode kommutiert der Kurzschlussstrom vom defekten Halbleitermodul auf diese Rückschwingdiode, die derart bemessen ist, dass diese im Fehlerfall des Subsystems durchlegiert. Bei der Ausführungsform mit dem Kurzschluss-Thyristor wird der gleichspannungsseitige Kurzschluss mittels der Sensorschaltung erkannt, die die Zündschaltung aktiviert, damit der Kurzschluss-Thyristor gezündet und infolge des auf ihn kommutierten Kurzschlussstromes durchlegiert. Nachteilig bei dieser Schutzschaltung ist, dass die Subsysteme in ihrem Aufbau abgeändert werden müssen. Zusätzlich wird eine Sensorschaltung und eine Zündschaltung benötigt, die in wenigen Millisekunden die Zündung des Kurzschluss-Thyristors einleiten. Außerdem muss der Kurzschluss-Thyristor niederinduktiv am Speicherkondensator angeschlossen sein.

Der Erfindung liegt nun die Aufgabe zugrunde, die bekannte Stromrichterschaltung mit verteilten Energiespeichern derart weiterzubilden, dass die zuvor genannten Nachteile nicht mehr auftreten.

Diese Aufgabe wird erfindungsgemäß mit dem kennzeichnenden Merkmal des Anspruchs 1 gelöst.

Dadurch, dass elektrisch parallel zu den Anschlussklemmen eines jeden Systems ein Schutz-Bauelement geschaltet ist, besteht die Möglichkeit, dieses Subsystem im Fehlerfall kurzschließen zu können. Da dieses Schutz-Bauelement an den Anschlussklemmen des Subsystems angeschlossen wird, bleibt der Aufbau des Subsystems unberührt. Dadurch können Subsysteme, die noch kein Schutz-Bauelement aufweisen, nachträglich mit einem solchen versehen werden. Die Schutz-Bauelemente sind derart beschaffen, dass diese nach Absorbtion einer bestimmten Überspannungsenergie in einen kurzschlussartigen Zustand übergehen. Das heißt, diese Schutz-Bauelemente legieren im Fehlerfall eines korrespondierenden Subsystems durch, wodurch dieses Subsystem kurzgeschlossen ist.

Damit ein Schutz-Bauelement eines gestörten Subsystems durchlegieren kann, muss zunächst ermittelt werden, welche von den in den Phasenmodulen der Stromrichterschaltung vorhandenen Subsysteme gestört ist. Sobald ein gestörtes Subsystem lokalisiert ist, wird durch gezielte Ansteuerung eines oder mehrerer ungestörter Subsysteme eine definierte Überspannungsenergie auf das gestörte Subsystem gegeben. Zu diesem Zweck ist es möglich, wenigstens ein Subsystem eines Phasenmoduls der Stromrichterschaltung, in dem das gestörte Subsystem angeordnet ist, für eine vorbestimmte Zeitspanne in einen Schaltzustand I zu steuern. Außerdem wird in den ungestörten Phasenmodulen der Stromrichterschaltung jeweils wenigstens zusätzlich ein Subsystem für eine vorbestimmte Zeitdauer in einen Schaltzustand II gesteuert.

Anstelle eines zusätzlichen Subsystems in einem gestörten Phasenmodul in den Schaltzustand I und eines zusätzlichen Subsystems jeweils in den ungestörten Phasenmodulen in den Schaltzustand II zu steuern, können alle Subsysteme der ungestörten Phasenmodule jeweils in den Schaltzustand II und alle ungestörten Subsysteme des gestörten Phasenmoduls in den Schaltzustand I gesteuert werden. Dadurch wird eine maximale einstellbare Überspannung an dem gestörten Subsystem angelegt, so dass diese durch das eingangsseitige Schutz-Bauelement einen Strom treibt, der dazu führt, dass dieses Schutz-Bauelement durchlegiert.

Um den Spitzenwert des Stromes durch das Schutz-Bauelement auf Werte zu begrenzen, die für die intakten abschaltbaren Halbleiterschalter zulässig sind, wird die Schaltdauer entsprechend eingestellt. Mit der Anzahl der Subsysteme, die zusätzlich in einen Schaltzustand I und II gesteuert werden, kann die am gestörten Subsystem anstehende Überspannung stufenweise eingestellt werden.

Zur weiteren Erläuterung der Erfindung wird auf die Zeichnung Bezug genommen, in der mehrere Ausführungsformen eines erfindungsgemäßen Schutz-Bauelementes schematisch veranschaulicht sind.
- Figur 1: zeigt ein Ersatzschaltbild einer bekannten Stromrichterschaltung mit verteilten Energiespeichern, in der
- Figur 2: ist ein Ersatzschaltbild einer ersten Ausführungsform eines bekannten Subsystems dargestellt, die
- Figur 3: zeigt ein Ersatzschaltbild einer zweiten Ausführungsform eines bekannten Subsystems, die
- Figur 4: zeigt ein Ersatzschaltbild einer dritten Ausführungsform eines bekannten Subsystems und in den Figuren 5 bis 10 sind verschiedene mögliche Ausführungsformen eines Schutz-Bauelementes näher dargestellt.

In Figur 5 ist ein erstes nicht erfindungsgemäßes Schutz-Bauelement 12 für ein Subsystem 10 gemäß Figur 2 oder 3 dargestellt. Als Schutz-Bauelement 12 ist eine Diode 14 vorgesehen. Anstelle dieser einen Diode 14 kann auch eine Reihenschaltung mehrerer Dioden vorgesehen sein. Mit ihren Anschlussklemmen 16 und 18 wird dieses Schutz-Bauelement 12 an den Anschlussklemmen X1 und X2, insbesondere an den Klemmen X1a und X2a, eines Subsystems 10 nach der Figur 2 oder 3 angeschlossen.

In der Figur 6 ist eine zweite Ausführungsform eines Schutz-Bauelementes 12 nach der Erfindung veranschaulicht. Als Schutz-Bauelement 12 ist hier ein Thyristor 20 vorgesehen, der eine sogenannte aktive Klemmbeschaltung 22 aufweist. Diese aktive Klemmbeschaltung 22 weist wenigstens eine Zener-Diode 24 auf, die kathodenseitig mit einem Anoden-Anschluss 26 des Thyristors 20 und anodenseitig mittels eines Gate-Widerstandes 28 mit einem Gate-Anschluss 30 des Thyristors 20 verknüpft ist. Anodenseitig ist die Zener-Diode 24 ebenfalls mittels eines Widerstands 32 mit einem Kathodenanschluss 34 des Thyristor 20 elektrisch leitend verbunden. Sobald eine an der Anode 26 des Thyristor 20 anstehende Spannung den Zener-Wert der Zener-Dioden 24 übersteigt, werden diese leitend und schalten den Thyristor 20 ein. Der Strom, der nun durch den Thyristor 20 fließt, sorgt dafür, dass dieser sicher durchlegiert. Der Thyristor 20 ist so bemessen, dass dieser Strom sicher zum Durchlegieren führt.

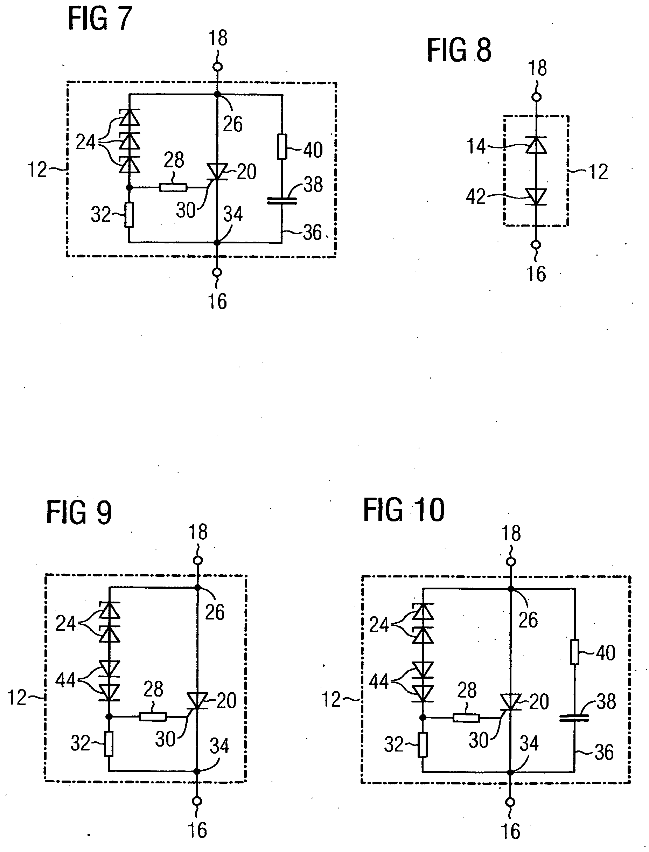

Die Ausführungsform des Schutz-Bauelementes 12 gemäß Figur 7 entspricht weitgehend der Ausführungsform gemäß Figur 6. Der Unterschied liegt darin, dass die Ausführungsform gemäß Figur 7 zusätzlich eine RC-Beschaltung 36 aufweist, die elektrisch parallel zur Anoden-Kathoden-Strecke dieses Thyristors 20 geschaltet ist. Diese RC-Beschaltung 36 weist einen Kondensator 38 und einen Widerstand 40 auf, die elektrisch in Reihe geschaltet sind. Mittels dieser RC-Beschaltung 36 werden die Schaltflanken der Schaltvorgänge der abschaltbaren Halbleiterschalter 1 und 3 eines zugehörigen Subsystems 10 gedämpft. Dadurch wird verhindert, dass das Schutz-Bauelement 12 nicht durch eine Schaltflanke eines Subsystems 10 angesteuert wird.

In der Figur 8 ist eine weitere nicht erfindungsgemäße Ausführungsform des Schutz-Bauelementes 12 näher dargestellt. Dieses Schutz-Bauelement 12 weist zwei Dioden 14 und 42 auf, die elektrisch antiseriell geschaltet sind. Durch diese Ausgestaltung ist dieses Schutz-Bauelement 12 in der Lage, eine positive und eine negative Spannung aufnehmen zu können. Das heißt, im ungestörten Fall eines Subsystems soll dieses eingangsseitig nicht kurzgeschlossen sein. Somit muss das Schutz-Bauelement 12 im ungestörten Fall eines Subsystems die anstehende Klemmspannung U_{X21} sicher aufnehmen können. Da bei der Ausführungsform des Subsystems 10 nach Figur 4 die Klemmenspannung U_{X21} gegenüber der Klemmenspannung U_{X21} des Subsystems 10 nach Figur 2 oder 3 auch negativ sein kann, wird ein Schutz-Bauelement 12 benötigt, das in beiden Richtungen eine Spannung aufnehmen kann. Anstelle jeweils einer Diode 14 bzw. 42 können auch hier jeweils mehrere Dioden verwendet werden.

Die Ausführungsform des Schutz-Bauelementes 12 gemäß Figur 9 entspricht weitgehend der Ausführungsform gemäß Figur 6. Der Unterschied liegt darin, dass zwischen den Zener-Dioden 24 anodenseitig und dem Gate-Widerstand 28 wenigstens eine Entkopplungsdiode 44 geschaltet ist. Dazu ist diese Entkopplungsdiode 44 kathodenseitig mit dem Gate-Widerstand 28 und anodenseitig mit der Anode der Zener-Diode 24 elektrisch leitend verbunden. Durch diese zusätzliche Entkopplungsdiode 44 kann dieses Schutz-Bauelement 12 in beiden Richtungen Spannung aufnehmen. Dadurch kann dieses Schutz-Bauelement 12 mit seinen Anschlussklemmen 16 und 18 elektrisch parallel zu den Anschlussklemmen X1 und X2, insbesondere X1a und X2a, eines Subsystems 10 gemäß Figur 4 geschaltet werden.

Die Ausführungsform des Schutz-Bauelementes 12 nach Figur 10 entspricht der Ausführungsform gemäß Figur 9, wobei zusätzlich eine RC-Beschaltung 36 elektrisch parallel zur Anoden-Kathoden-Strecke des Thyristors 20 geschaltet ist.

Im Ersatzschaltbild gemäß Figur 1 ist ein Subsystem 10 des Stromrichterventils T2 gestört. Dies ist durch eine Schraffur kenntlich gemacht. In den Phasenmodulen 100 dieser dreiphasigen Stromrichterschaltung nach Figur 1 sind zusätzliche Impedanzen Z eingefügt, die summarisch die vorhandenen Induktivitäten (Streuinduktivitäten) und Ohmschen Widerstände in den Brükkenhälften repräsentieren. Zusätzlich zu diesen parasitären Impedanzen können auch diskrete Bauelemente in den Phasenmodulen 100 angeordnet sein.

Die Störung eines Subsystems 10 wird mittels einer Spannungserfassung mit anschließendem Vergleich mit einem vorbestimmten Toleranzband ermittelt. Außerdem können auch andere Fehler zu einem Ausfall des Subsystems führen: z.B. Ausfall der Elektronik, Störung der Kommunikation. Diese Fehler werden über die Steuerung erkannt und führen auch notwendigerweise zum Kurzschließen eines Subsystems. Fällt nun das schraffierte Subsystem 10 des Stromrichterventils T2 aus, so steht maximal der Energieinhalt aller Subsysteme 10 des Phasenmoduls 100 mit den Stromrichterventilen T3 und T4 und des Phasenmoduls 100 mit den Stromrichterventilen T5 und T6 zur Verfügung, um eine definierte Überspannungsenergie zum Durchlegieren des Schutz-Bauelements 12 des schraffierten Subsystems 10 des Thyristorventils T2 zu erzeugen. Zu diesem Zweck könnten alle Subsysteme 10 dieser beiden ungestörten Phasenmodule 100 in den Schaltzustand II gesteuert werden, wobei alle ungestörten Subsysteme 10 des gestörten Phasenmoduls 100 in den Schaltzustand I gesteuert werden. Im Schaltzustand II ist die am Subsystem 10 anstehende Klemmspannung U_{X21} gleich der am Speicherkondensator 9 anstehenden Kondensatorspannung U_{C}. Im Schaltzustand I ist die am Subsystem 10 anstehende Klemmenspannung U_{X21} gleich Null. Infolge dieser Steuerung der Subsysteme 10 fließen die in der Figur 1 mit Pfeilen gekennzeichneten Ströme i_{K1}, i_{K2} und i_{K3}. Um den Spitzenwert dieser Ströme i_{K1}, i_{K2} und i_{K3} auf Werte zu begrenzen, die für intakte abschaltbare Halbleiterschalter 1, 3, 5 und 7 der Subsysteme 10 zulässig sind, ist jeweils eine Zeitdauer für diese Schaltzustände II und I entsprechend zu regeln. Die Bestimmung dieser Zeitdauer ist bei Kenntnis der Impedanzen Z vorab möglich. Durch diese Steuerung der Subsysteme 10 steht am gestörten Subsystem 10 eine Überspannung an, deren Energie vom korrespondierenden Schutz-Bauelement 12 absorbiert wird. Dadurch geht dieses Schutz-Bauelement 12 in einen kurzschlussartigen Zustand über, d.h., das Schutz-Bauelement 12 legiert durch.

Da die maximale verfügbare Energie bei weitem ausreichend ist, wird dieses beschriebene Steuerverfahren modifiziert. Beim modifizierten Steuerverfahren wird im gestörten Phasenmodul 100, das gemäß dem Ersatzschaltbild nach Figur 1 die beiden Stromrichterventile T1 und T2 umfasst, gegenüber dem Normalbetrieb nur ein Subsystem 10 zusätzlich in den Schaltzustand I und in den ungestörten Phasenmodulen 100 nur je ein Subsystem 10 zusätzlich in den Schaltzustand II gesteuert. Die dadurch am gestörten Subsystem 10 anstehende Spannung reicht aus, um das zugehörige Schutz-Bauelement 12 durchlegieren zu lassen.

Durch die Wahl und jeweilige Anzahl der eingesetzten Subsysteme 10 pro Phasenmodul 100 muss sichergestellt werden, dass mit den ungestörten Phasenmodulen 100 sowohl die Einstellung der in Figur 1 eingezeichneten Stromrichtungen durch Ströme i_{K2} und i_{K3} als auch der entgegengesetzten Stromrichtung des Stromes i_{K1} möglich sind.

Durch diese Steuerung der Subsysteme 10 der Phasenmodule 100 einer mehrphasigen Stromrichterschaltung werden die Gleichspannung an den Gleichspannungs-Sammelschienen P₀ und N₀ und die Wechselspannung an den Lastanschlüssen L1, L2 und L3 gegenüber einem Normalbetrieb nur geringfügig und nur für die Zeitdauer beeinflusst.

Eine für intakte abschaltbare Halbleiterschalter zulässige Höhe des resultierenden Stromimpulses lässt sich, wie bereits erwähnt, rechnerisch vorab bestimmen. Eine Messung des Stromimpulses lässt sich ebenfalls durchführen, falls Messwerterfassungen der Zweigströme vorhanden sind. Auf diese Weise kann auch mit einer variablen Zeitdauer gearbeitet werden, die so angepasst wird, dass ein vorbestimmter Maximalstrom erreicht wird.

Die genannten Schaltzustände der Zeitdauer können auch mehrfach wiederholt angesteuert werden, wobei die Anzahl dieser gesteuerten Schaltzustände und eine Pausenzeit zwischen diesen Wiederholungen so gewählt werden, dass ein im Grenzfall vollständig entladener Speicherkondensator 9 eines gestörten Subsystems 10 möglichst schnell wieder geladen ist.

## Patentansprüche

1. Stromrichterschaltung mit drei jeweils ein oberes und ein unteres Stromrichterventil (T1,...,T6) aufweisenden Phasenmodulen (100), wobei diese Phasenmodule (100) gleichspannungsseitig mit einer positiven und negativen Gleichspannungs-Sammelschiene (P₀,N₀) elektrisch leitend verbunden sind, und wobei jedes Stromrichterventil (T1,...,T6) wenigstens zwei zweipolige Subsysteme (10) aufweist, die elektrisch in Reihe geschaltet sind,
**dadurch gekennzeichnet, dass**
elektrisch parallel zu den Anschlussklemmen (X1, X2) eines jeden Subsystems (10) ein Schutz-Bauelement (12) geschaltet ist, das derart beschaffen ist, dass dieses im Fehlerfall eines korrespondierenden, als gestört ermittelten Subsystems durch Absorption einer durch gezielte Ansteuerung wenigstens eines ungestörten Subsystems bereitgestellten, definierten Überspannungsenergie durchlegiert, wobei das Schutz-Bauelement in einen kurzschlussartigen Zustand übergeht, wodurch das als gestört ermittelte Subsystem kurzgeschlossen ist, wobei als Schutz-Bauelement (12) ein Thyristor (20) vorgesehen ist, dessen Anode (26) mittels einer aktiven Klemmbeschaltung (22) mit seinem Gate (30) verknüpft ist.

## Claims

1. Inverter circuit having three phase modules (100) in each case comprising an upper and a lower converter valve (T1,...,T6), these phase modules (100) being electrically connected on the DC side to a positive and a negative DC busbar (P₀, N₀), and each converter valve (T1,...,T6) comprising at least two two-terminal subsystems (10), which are electrically connected in series,
**characterized in that** a protective component (12) is electrically connected in parallel with the connecting terminals (X1, X2) of each subsystem (10), which protective component is designed such that, in the event of a fault of a corresponding subsystem determined as being faulty, said protective component becomes shorted as a result of absorbing a defined amount of overvoltage energy provided through selective driving of at least one fault-free subsystem, wherein the protective component goes into a short-circuit-like state, whereby the subsystem determined as being faulty is short-circuited,
wherein
a thyristor (20), whose anode (26) is connected to its gate (30) by an active clamping circuit (22), is provided as the protective component (12).

## Revendications

1. Montage convertisseur ayant trois modules ( 100 ) de phase comportant une soupape ( T1,..., T6 ) de convertisseur supérieure et une soupape ( T1,..., T6 ) de convertisseur inférieure, ces modules ( 100 ) de phase étant reliés d'une manière conductrice de l'électricité du côté de la tension continue à une barre ( P₀, N₀ ) collectrice de tension continue positive et négative et dans lequel chaque soupape ( T1,..., T6 ) de convertisseur a au moins deux sous-systèmes ( 10 ) bipolaires, qui sont montés électriquement en série, **caractérisé en ce qu'**il est monté électriquement en parallèle aux bornes ( X1, X2 ) de connexion de chaque sous-système ( 10 ) un composant ( 12 ) de protection, qui est tel qu'il fait claquer un sous-système correspondant déterminé comme perturbé en cas de défaillance, par absorption d'une énergie de surtension définie, mise à disposition par excitation ciblée d'au moins un sous-système non perturbé,
dans lequel le composant de protection passe dans un état de type court-circuit, grâce à quoi le sous-système déterminé comme perturbé est court-circuité, dans lequel il est prévu comme composant (12) de protection un thyristor (20), dont l'anode (26) est reliée à sa grille (30) au moyen d'un circuit (22) de niveau actif.
